# FASCICULE DE BREVET EUROPEEN

(11) **EP 1 693 276 B1**
(45) Date de publication et mention de la délivrance du brevet: **02.06.2010**
(21) Numéro de dépôt: 06110059.0
(22) Date de dépôt: 16.02.2006
(51) Int. Cl.: B62B 9/00, B62B 7/08

(54) **Poussette pour enfant à châssis pliant, comprenant un repose-pieds articulé**
Zusammenklappbarer Kinderwagen mit einer drehbaren Fussstütze
Foldable stroller with articulated foot rest

(30) Priorité: 16.02.2005 FR 0501590; 08.03.2005 FR 0502324
(43) Date de publication de la demande: 23.08.2006
(73) Titulaire: Dorel France SA, 49309 Cholet Cedex (FR)
(72) Inventeur: Ageneau, Laurent, 44210 Pornic (FR)
(74) Mandataire: Larcher, Dominique

(56) Documents cités:
- WO-A-99/29555
- FR-A- 2 564 405
- US-A- 2 484 939
- US-A- 3 936 069
- US-A1- 2004 026 896

## Description

### 1. Domaine de l'invention

Le domaine de l'invention est celui de la puériculture. Plus précisément, l'invention concerne les voitures d'enfant, et en particulier le pliage de telles voitures d'enfant. Plus précisément encore, l'invention concerne les poussettes à pliage compact, ou en trois dimensions.

### 2. L'art antérieur

On connaît déjà de très nombreuses techniques de pliage de châssis de poussette. D'une façon générale, on cherche notamment à concilier au moins certains des objectifs suivants :
- efficacité du pliage, l'encombrement de la poussette pliée devant être le plus réduit possible, de façon à faciliter son rangement, et son transport, par exemple dans un véhicule automobile ;
- simplicité des manipulations de pliage et dépliage, l'utilisateur devant pouvoir effectuer ces opérations avec un nombre réduit d'opérations, et chacune de ces opérations devant être le plus facile possible ;
- sécurité de l'enfant transporté et notamment contrôle du pliage (pour lutter contre un pliage non souhaité, en particulier en présence d'un enfant) ;
- simplicité et faible coût de la fabrication.

Il est en outre souhaitable, bien sûr, qu'en position pliée, la poussette puisse être stockée ou entreposée de façon stable et sûre, par exemple, dans une pièce généralement très fréquentée ou à fort passage.

Parmi les différents types de châssis connus, il existe une catégorie dite à pliage fagot (ou pliage 3D). Selon cette technique, certains organes de la poussette basculent et/ou coulissent, de façon à former un bloc compact, en position pliée.

On connaît de nombreuses méthodes de pliage fagot. Une méthode classique, selon laquelle les bras poussoirs sont partiellement ramenés en coulissement le long des piètements, de façon à réduire l'encombrement de la poussette, en position pliée, est notamment décrite dans le document de brevet international WO99/29555.

On connaît également un pliage dit « parapluie », décrit par exemple dans le document de brevet US 3,936,069 qui divulgue toutes les caractéristiques du préambule de la revendication 1. Selon cette méthode, les piètements avant et arrière de la poussette sont articulés sur une poutre principale, de sorte qu'en faisant coulisser ces piètements le long de la poutre, ils viennent former un angle réduit par rapport à la poutre.

Ces techniques de pliage donnent en général une assez bonne satisfaction en termes d'efficacité et de simplicité de pliage/dépliage du châssis, et conduisent généralement à un encombrement relativement faible de la poussette pliée. En revanche, les inventeurs ont constaté que les systèmes connus de ce type s'avèrent mal adaptés, dans de nombreuses situations de rangement. En effet, il est souvent difficile et parfois impossible, de faire tenir debout une poussette pliée, si ce n'est en équilibre précaire.

En général, pour obtenir une position de rangement vertical stable, l'utilisateur pose la poussette pliée contre un mur. Dans la majorité des cas, elle finit par tomber, par exemple, à cause d'un coup de vent, d'un claquement de porte, d'un mouvement ou encore parce qu'elle est en appui contre un sol et/ou un mur glissant(s). La poussette encombre alors l'espace au sol, et cela oblige l'utilisateur à se baisser pour ramasser la poussette.

En outre, lorsque la poussette tombe par terre, elle peut notamment se détériorer, se salir, endommager l'environnement dans lequel elle se trouve ou encore blesser une personne avoisinante.

Pour aider la poussette à tenir debout, une solution peut consister à équiper la poussette de moyens spécifiques, tels que des pieds ou des béquilles. Mais ces moyens sont relativement encombrants, et augmentent le coût et le poids de la poussette.

### 3. Objectifs de l'invention

L'invention a notamment pour objectif de pallier ces inconvénients de l'art antérieur.

Plus précisément, un objectif de l'invention est de fournir une poussette qui soit facile à mettre et à maintenir dans une position debout.

Ainsi, notamment, un objectif de l'invention est de fournir une telle poussette capable de mieux conserver la position debout, lorsque la poussette est complètement pliée, et garder la position debout, même en l'absence de surface d'appui verticale.

Un autre objectif de l'invention est de fournir une telle poussette, qui assure une bonne stabilité dans la position debout, sans pied ou béquille dédié.

L'invention a également pour objectif de fournir une telle poussette, qui soit simple de conception et peu coûteuse à réaliser et à monter.

### 4. Caractéristiques essentielles de l'invention

Ces objectifs, ainsi que d'autres qui apparaîtront plus clairement par la suite, sont atteints à l'aide d'une poussette pliante pour enfant, comprenant un châssis pliable portant deux roues ou blocs de roues avant se rapprochant l'une de l'autre, en position pliée. Selon l'invention, la poussette comprend un repose-pieds formé de deux portions articulées entre-elles et articulées chacune sur un élément dudit châssis, et montées de façon que :
- dans la position dépliée de ladite poussette, lesdites portions forment un repose-pieds s'étendant sensiblement horizontalement ;
- dans ladite position pliée, lesdites portions défmissent un V dont la partie inférieure forme au moins un point d'appui sur le sol, de façon que ladite poussette tienne en équilibre dans une position debout, en appui sur au moins trois points d'appui, dont au moins un premier point d'appui formé par ladite partie inférieure du V et au moins un second point d'appui formé par lesdites roues avant.

On obtient ainsi des points d'appui au sol particulièrement efficaces et simples à mettre en oeuvre, et ce, contrairement à la technique de l'art antérieur précitée, sans un pied ou une béquille coûteux et encombrant. En outre, les portions du repose-pieds et les roues peuvent produire des forces s'opposant au basculement de la poussette, dans des directions sensiblement identiques ou différentes.

Selon un aspect avantageux de l'invention, chacune desdites portions du repose-pieds présente un premier point d'appui sur le sol.

De façon préférentielle, l'articulation entre lesdites portions du repose-pieds est décalée de façon à maximiser l'écartement entre lesdits premiers points d'appui, en position pliée.

Dans un mode de réalisation préférentiel de l'invention, lesdites portions sont configurées de façon que, dans ladite position pliée, la force appliquée à chacun desdits premiers points d'appui par le poids de ladite poussette s'oppose au dépliage de celle-ci.

Avantageusement, lesdites portions sont de forme identique.

Préférentiellement, lesdits premiers points d'appui sont formés directement par un bord de chacune desdites portions.

De façon avantageuse, lesdits premiers points d'appui sont formés par une extension prévue à cet effet sur chacune desdites portions.

De façon préférentielle, ledit châssis présente une poutre centrale, le long de laquelle coulissent des montants portant lesdites roues, selon un pliage de type parapluie.

Selon un aspect avantageux de l'invention, le mouvement desdites portions de repose-pieds, lors du pliage et/ou du dépliage de la poussette, est contrôlé par un câble ou une biellette.

Préférentiellement, ledit châssis présente un jeu de croisillons assurant le rapprochement et l'éloignement desdites roues, respectivement lors du pliage et du dépliage.

Avantageusement, le mouvement desdites portions de repose-pieds, lors du pliage et/ou du dépliage de la poussette, est contrôlé par le déplacement de montants portant lesdites roues avant.

Dans un mode de réalisation préférentiel de l'invention, l'articulation entre une desdites portions et ledit châssis est une articulation selon au moins deux axes de rotation.

### 5. Liste des figures

D'autres caractéristiques et avantages de l'invention apparaîtront plus clairement à la lecture de la description suivante d'un mode de réalisation préférentiel de l'invention, donnée à titre de simple exemple illustratif et non limitatif, et des dessins annexés, parmi lesquels :
- les figures 1A et 1B illustrent, vu de derrière, un premier mode de réalisation d'une poussette selon l'invention, respectivement en position pliée et dépliée ;
- la figure 2 illustre, vue de côté, la poussette des figures 1A et 1B, en position pliée.
- la figure 3 illustre, vue de devant, la partie basse de la poussette des figures 1A et 1B, en position dépliée ;
- la figure 4 illustre le repose-pieds de la figure 3, en position pliée ;
- la figure 5 illustre un autre exemple de repose-pieds pour la poussette des figures 1A et 1B ;
- les figures 6A à 6C illustrent de façon plus détaillée le repose-pieds de la figure 5 ;
- les figures 7A et 7B présentent un second mode de réalisation d'une poussette pouvant mettre en oeuvre l'invention ;
- les figures 8A et 8B présentent le repose-pieds de la poussette des figures 7A et 7B, respectivement en positions dépliée et pliée ; et
- la figure 9 est une vue schématique présentant, vue de devant, le repose-pieds de la figure 8A.

### 6. Description de modes de réalisation de l'invention

L'invention concerne donc une amélioration des poussettes à pliage en trois dimensions (aussi appelée pliage fagot).

Le principe général de l'invention repose sur l'utilisation d'un repose-pieds articulé, formant au moins un point d'appui sur le sol, en position pliée. Au moins un autre point d'appui est formé par les roues avant. L'ensemble de ces points d'appui permet de maintenir la poussette dans une position debout. Aucun autre accessoire, tel qu'un pied ou une béquille, n'est nécessaire.

Deux modes de réalisation particuliers sont décrits ci-après. Dans ces deux exemples, on présente uniquement les châssis de poussette, sans leur hamac ou un autre équipement, pour faciliter la lisibilité.

### 6.1 Poussette à pliage « parapluie »

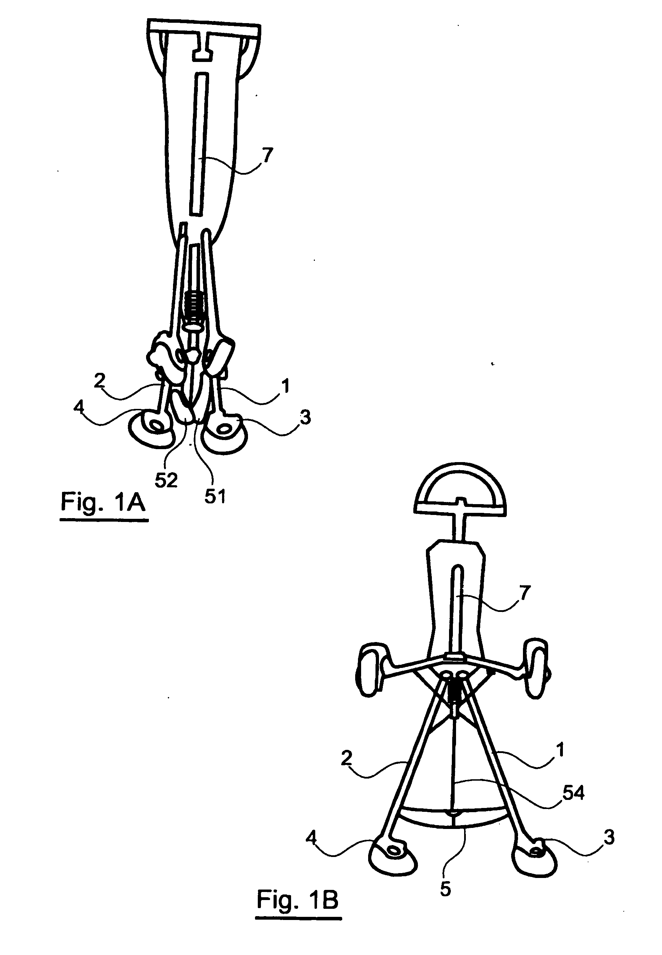

Selon un premier mode de réalisation, la cinématique de pliage de la poussette est de type parapluie. Selon cette technique dans la position pliée (figure 1A), les bras 1 et 2 forment un angle réduit par rapport à la poutre centrale 7, et dans la position dépliée (figure 1B), les bras 1 et 2 forment un angle supérieur à cet angle réduit. En d'autres termes, dans la position pliée, les bras sont sensiblement parallèles entre eux et les roues 3 et 4 se rapprochent l'une de l'autre, tandis que, dans la position dépliée, les bras sont divergents les uns par rapport aux autres et les roues 3 et 4 s'éloignent l'une de l'autre. Les bras passent de la position pliée à la position dépliée, et inversement, en coulissant le long de la poutre centrale 7.

Comme cela est expliqué par la suite, du fait que les bras avant 1 et 2 sont solidarisés aux bords extérieurs 511 et 521 du repose-pieds 5, le mouvement d'ouverture/fermeture du repose-pieds, lors du pliage/dépliage de la poussette, est également contrôlé par le déplacement des bras avant.

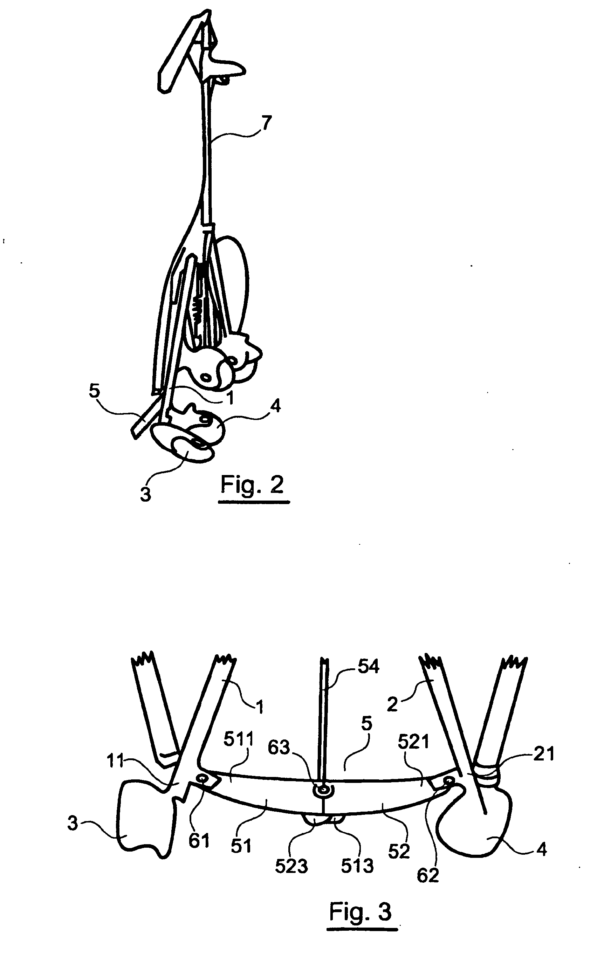

Dans la position debout (poussette pliée) illustrée par la figure 2, la poutre centrale 7 et les bras 1 et 2 sont sensiblement perpendiculaires au sol. Les palettes 51 et 52 du repose-pieds forment un angle avec le sol, de façon à produire des forces s'opposant au basculement de la poussette vers l'avant de celle-ci.

Avantageusement, la force appliquée à chaque palette par le poids de la poussette s'oppose au dépliage de celle-ci. Les roues 3 et 4, en contact avec le sol, forment également un angle avec le sol, de façon à produire des forces s'opposant au basculement de la poussette vers l'arrière de celle-ci. Selon l'invention, les roues forment des points d'appui qui, en association avec les points d'appui formés par les bords intérieurs des palettes, permettent à la poussette de tenir en équilibre dans une position debout.

Les figures 3 à 5 présentent une partie du châssis de cette poussette, vue de devant. Seuls les éléments essentiels, dans le cadre de l'invention, sont représentés. Pour faciliter la lecture des figures, certains éléments (comme les bras ou le câble de commande) sont interrompus.

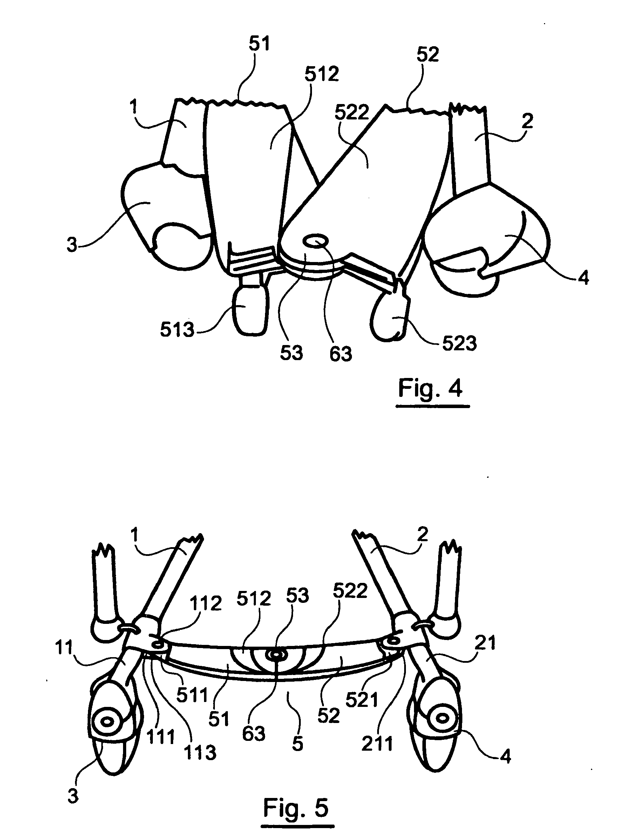

La figure 3 présente le repose-pieds en position dépliée, et la figure 4 le repose-pieds en position pliée.

Comme illustré sur ces figures, le châssis comprend deux bras avant 1 et 2, dont les extrémités inférieures 11 et 21 portent respectivement les blocs de roue 3 et 4. Chaque bloc porte par exemple une ou deux roues.

Les bras avant 1 et 2 sont prévus pour être montés en liaison pivot, au voisinage de leurs extrémités inférieures 11 et 21, avec les bords extérieurs 511 et 521 d'un repose-pieds 5, à l'aide, par exemple, de vis 61 et 62 contrôlant le serrage des pièces, ou de rivets.

Selon l'invention, le repose-pieds 5 est formé de deux portions, ou palettes, 51 et 52 pivotantes l'une par rapport à l'autre. Ces palettes sont articulées entre-elles autour d'un point d'articulation 53, formé au voisinage des bords intérieurs 512 et 522 du repose-pieds 5. Ces bords intérieurs sont solidarisés l'un à l'autre, par l'intermédiaire d'une vis ou d'un pivot 63.

Avantageusement, les deux palettes 51 et 52 sont identiques, ce qui simplifie la fabrication. En effet, ces deux palettes peuvent ainsi être réalisées dans le même moule. La palette 51 correspond à la palette 52, lorsqu'elle est retournée, et réciproquement.

De façon que la palette 51 soit parfaitement affleurante avec la palette 52, on prévoit une portion d'épaisseur réduite, formée au voisinage du bord intérieur de chaque palette. Les portions d'épaisseur réduite sont mises en contact l'une sur l'autre, puis solidarisées. On obtient ainsi, en position dépliée, un repose-pieds formant un bloc avec un aspect esthétique original.

Dans le mode de réalisation illustré sur la figure 3, on a prévu une commande du repose-pieds 5, basée sur l'utilisation d'un câble métallique 54, dont une première extrémité est solidaire de la poutre centrale et une seconde extrémité est solidaire du repose-pieds 5, au voisinage du point d'articulation 53. Le câble d'entraînement 54 peut être fixé au repose-pieds par l'intermédiaire de la vis 63.

Dans une variante de réalisation, le repose-pieds peut être équipé d'un élément d'accrochage (non représenté) conçu pour accrocher le câble d'entraînement 54. Ce câble guide le repose-pied, depuis une position pliée vers une position dépliée, et inversement. Ce câble peut être remplacé par un mécanisme à biellette(s).

Ainsi, comme illustré par la figure 3, dans la position dépliée, les palettes 51 et 52 forment un repose-pieds 5 s'étendant horizontalement entre les bras 1 et 2, et dans la position pliée illustrée par la figure 4, les palettes 51 et 52 forment un « V » dont la base est pointée vers le sol. L'ouverture du « V » est prédéterminée.

Comme illustré par la figure 4, deux butées 513 et 523, par exemple en matière plastique, sont prévues pour être solidarisées sur la face inférieure du repose-pieds 5. Ces butées peuvent prendre deux positions : une position passive (figure 3), obtenue à l'ouverture du repose-pieds 5, dans laquelle les butées sont disposées croisées l'une sur l'autre, et une position active (figure 4), dans laquelle les butées s'étendent sensiblement dans le prolongement de chaque palette 51 et 52 du repose-pieds.

On obtient ainsi une poussette avec des moyens de stabilisation escamotables formant, dans la position pliée, des points d'appui qui permettent de soutenir la poussette dans une position debout.

On peut également envisager des butées ajustables, de façon à adapter la longueur de chaque butée en fonction de la configuration du sol (sol légèrement incliné, sol présentant des trous, etc.). Ces butées peuvent être, par exemple, coulissantes le long des palettes ou réglables par un système à vis. Elles peuvent en outre être escamotables, en position de châssis déplié.

Il est à noter que dans la position active (butées en appui au sol), chaque butée, venant en contact avec le sol, exerce une force opposée à la force d'ouverture de chaque palette du repose-pieds. En d'autres termes, les butées s'opposent au dépliage du repose-pieds.

On note également que le point d'articulation 53 est décalé vers la face arrière du repose pied, de façon à maximiser l'écartement entre les points d'appui, en position pliée.

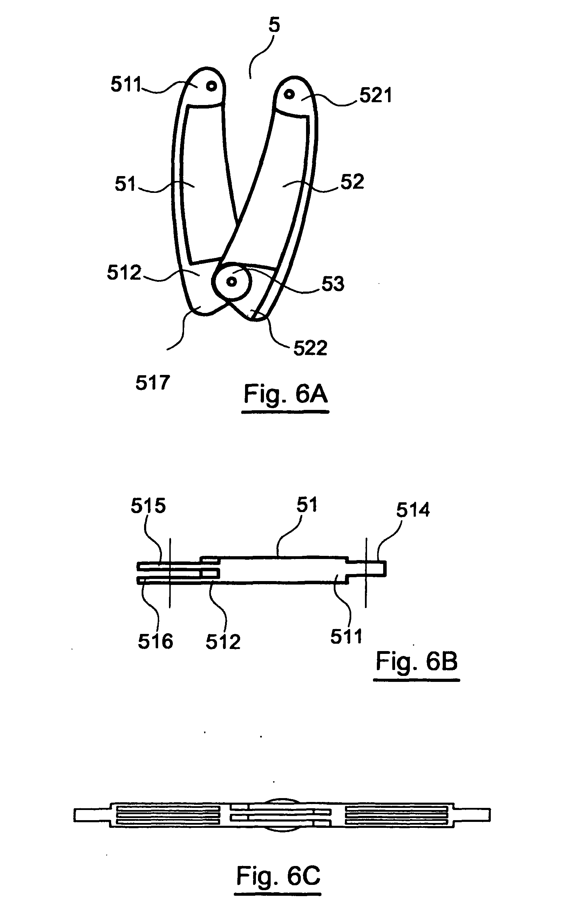

Selon un autre mode de mise en oeuvre, les palettes 51 et 52 peuvent être configurées pour que leurs bords intérieurs 512 et 522, en position pliée, assurent la fonction d'appui au sol, de façon à s'affranchir de la présence des butées. Le repose-pieds de la figure 5 utilise de telles palettes, qui sont décrites plus en détail par les figures 6A à 6C.

On note sur cette figure 5 que chaque bord extérieur 511 et 521 du repose-pieds 5 vient partiellement se loger, pour y être solidarisé, dans une chambre 111 et 211 prévue à cet effet sur chaque bras 1 et 2. Chaque chambre 111 et 211 est définie par l'espace formé entre deux pinces 112 et 113, par exemple en matière plastique rigide. Bien entendu, d'autres configurations de chambre peuvent être envisagées, permettant notamment de clipper les bords du repose-pieds.

Comme cela apparaît sur les figures 6A à 6C, chaque palette présente un bord intérieur rallongé d'une portion 517 en forme de « V », dont la base, pouvant être sensiblement arrondie, forme un point d'appui sur le sol. Avantageusement, les bords intérieurs 512 et 522 sont sensiblement parallèles l'un par rapport à l'autre et sont en contact avec le sol au même niveau, de façon à garantir des points d'appui plus performants, et donc une meilleure stabilité de la poussette en position debout.

Chaque palette (figure 6B) comprend une oreille 514, formée au niveau de son bord extérieur 511, et deux doigts 515 et 516, formés au niveau de son bord intérieur 512. L'oreille 514 est prévue pour être solidarisée à une extrémité inférieure 11 d'un bras avant 1, par exemple par l'intermédiaire d'une vis de serrage. De façon avantageuse, l'oreille présente en son centre un trou, dans lequel vient s'insérer la vis de serrage.

Comme déjà indiqué, les palettes 51 et 52 sont identiques, de sorte qu'en retournant la palette 51, on obtient la palette 52, et inversement. Ainsi, la palette 51 s'encastre parfaitement dans la palette 52, par l'intermédiaire de leurs doigts respectifs, de façon à obtenir un repose-pieds compact. Chaque doigt comprend un trou, permettant ainsi de les solidariser les uns aux autres, par l'intermédiaire d'une vis.

Dans le mode de réalisation illustré sur la figure 6C, trois rainures longitudinales sont formées sur la face arrière de chaque palette, de façon à rigidifier cette dernière. Bien entendu, d'autres formes et un autre nombre de rainures peuvent être envisagés.

### 6.1 Poussette à poussoirs coulissants

Selon un second mode de réalisation, la poussette est équipée d'un mécanisme à croisillons, reliant les deux brancards arrière (aussi appelés piètements arrière). Un tel mécanisme permet le guidage des brancards arrière de la position pliée à la position dépliée, et vice-versa.

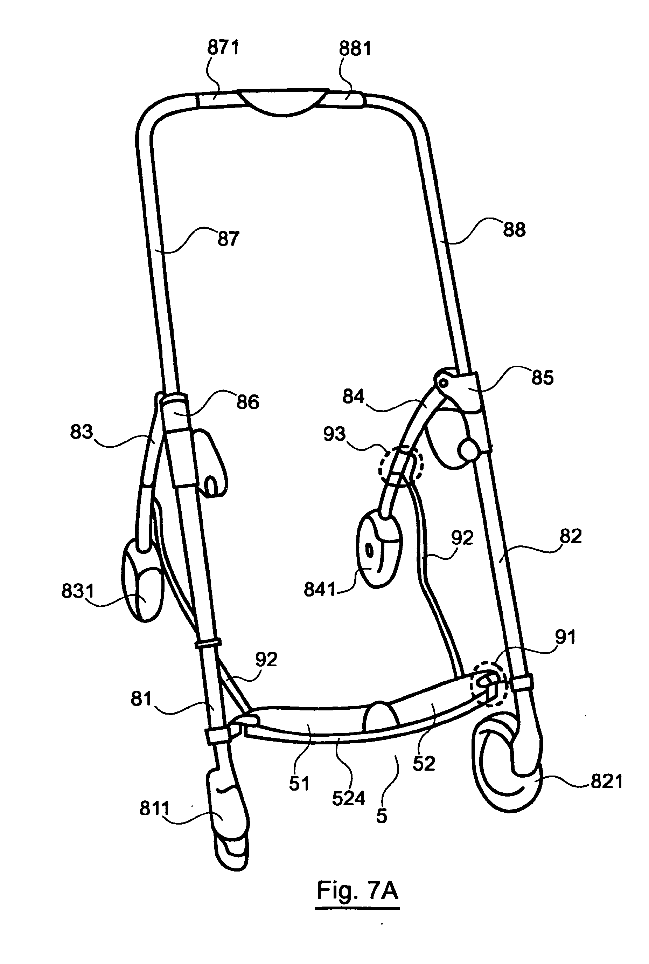

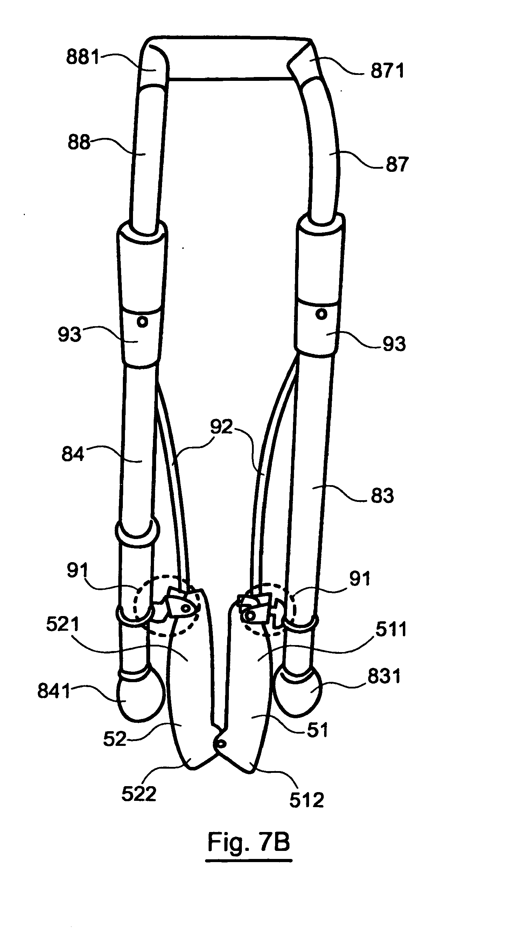

Les figures 7A et 7B présentent un exemple de châssis pliant d'une telle poussette, respectivement en position dépliée et pliée.

Comme illustré sur ces figures, le châssis comporte deux brancards, ou piétements, avant 81 et 82 et deux brancards, ou piétements arrière, 83 et 84.

Des roues avant 811 et 821 (ou des blocs de roue) sont montées à l'extrémité inférieure des brancards avant 81 et 82 et des roues arrière 831 et 841 (ou des blocs de roue) sont montées à l'extrémité inférieure des brancards arrière 83 et 84. Ainsi, dans la position dépliée (figure 7A), les roues s'éloignent l'une de l'autre, et dans la position pliée (figure 7B), les roues se rapprochent l'une de l'autre.

L'extrémité supérieure de chaque brancard avant 81 et 82 est liée à l'extrémité supérieure d'un brancard arrière 83 et 84 par une pièce charnière 85 et 86. Cette pièce charnière 85 et 86 permet une rotation du brancard arrière 83 et 84 par rapport au brancard avant 81 et 82.

Le châssis comporte également deux poussoirs 87 et 88 s'étendant respectivement, en position dépliée, dans le prolongement des deux brancards avant 81 et 82, de façon qu'ils coulissent à l'intérieur de ces derniers, lors du pliage. La partie supérieure de ces poussoirs 87 et 88 est munie de poignées 871 et 881. Ces poignées peuvent être reliées ou non, selon le cas.

Le châssis comporte en outre un repose-pieds 5 (formé de deux palettes), tel que celui décrit précédemment en relation avec les figures 6A à 6C.

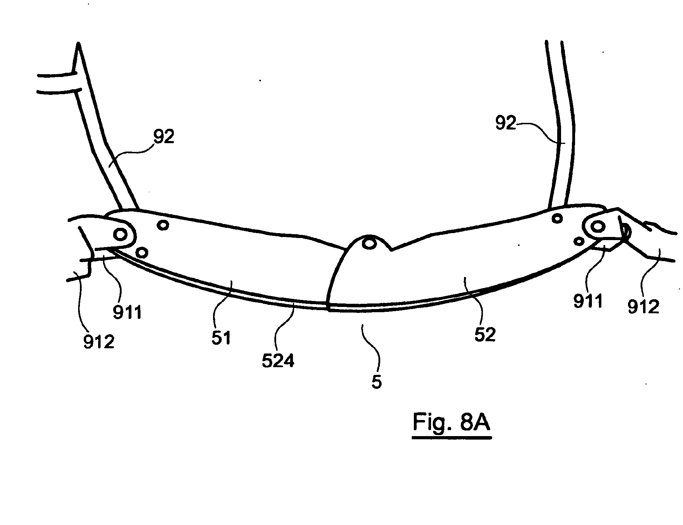

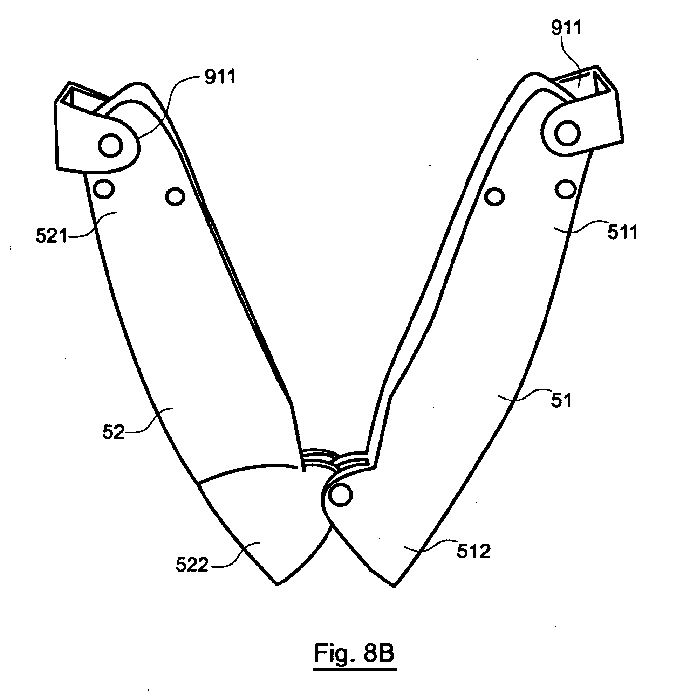

Comme illustré sur la figure 8A, dans la position dépliée, les palettes 51 et 52 forment un repose-pieds s'étendant horizontalement entre les brancards avant 81 et 82, et dans la position pliée illustrée par la figure 8B, les palettes 51 et 52 forment un « V » dont la base est pointée vers le sol, de manière que les bords intérieurs 512 et 522 du repose-pieds 5 assurent la fonction d'appui au sol. Ces points d'appui permettent ainsi de maintenir la poussette dans une position debout.

Dans le mode de réalisation illustré par la figure 7A, le bord extérieur 511 et 521 de chaque palette 51 et 52 est prévu pour être solidarisé, d'une part à l'extrémité inférieure d'un brancard avant 81 et 82 par un élément d'articulation 91, et d'autre part au voisinage de l'extrémité inférieure d'un brancard arrière 83 et 84 par l'intermédiaire d'une barre de liaison 92. Cette barre de liaison 92 guide le repose-pieds 5, depuis la position pliée vers la position dépliée, et inversement.

Avantageusement, les barres de liaison 92 sont montées articulées sur des éléments coulissants 93 se déplaçant le long des brancards arrière 83 et 84, de sorte que dans la position pliée du châssis (figure 7B), les barres de liaison 92 forment un angle réduit par rapport aux brancards arrière 83 et 84, et dans la position dépliée du châssis (figure 7A), les barres de liaison 92 forment un angle supérieur à cet angle réduit.

En d'autres termes, dans la position pliée (autrement dit, dans la position debout de la poussette), les barres de liaison 92 sont sensiblement perpendiculaires au sol, tandis que, dans la position dépliée, les barres de liaison sont sensiblement parallèles au sol.

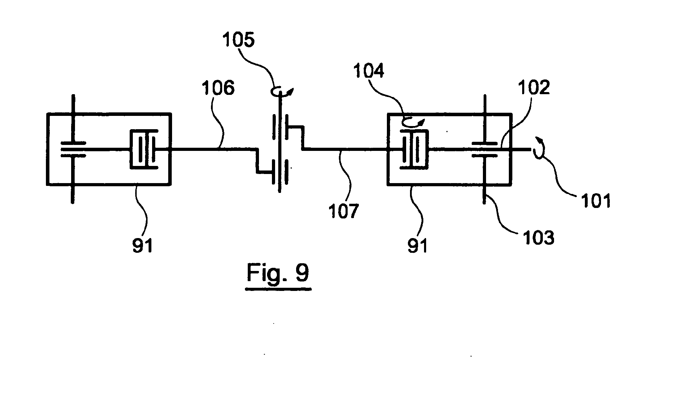

L'élément d'articulation 91 permet deux rotations du repose-pieds, comme illustré schématiquement par la figure 9 : une première rotation 101 autour d'un axe 102 défini sensiblement parallèlement au sol sur lequel est placé le montant 103 portant la ou les roues, et une seconde rotation 104 autour d'un axe défini sensiblement perpendiculairement au sol.

Un troisième axe de pivotement 105 assure le pliage et le dépliage des deux palettes 106 et 107.

Ce double pivotement du repose-pied par rapport à l'élément de liaison au châssis est un aspect important de la mise en oeuvre du présent mode de réalisation.

Selon le présent mode de réalisation de l'invention, la première rotation conduit le repose-pieds 5, depuis une première position dite « position passive » dans laquelle le repose pieds 5 (s'étend horizontalement entre les brancards avant) présente une face avant 524 orientée vers l'avant de la poussette, vers une seconde position dite « position intermédiaire » dans laquelle la face avant 524 du repose-pieds est orientée vers le sol.

La seconde rotation, quant à elle, conduit le repose-pieds 5 depuis la position intermédiaire vers une position dite « position active » dans laquelle les bords 512 et 522 du repose-pieds forment des points d'appui au sol.

En d'autres termes, dans les positions passive et intermédiaire, les palettes 51 et 52 du repose-pieds sont sensiblement alignées l'une par rapport à l'autre, tandis que, dans la position active, elles sont sensiblement parallèles l'une par rapport à l'autre, de façon à former les côtés d'un « V ».

Dans ce mode de réalisation, chaque élément d'articulation 91 comprend une pince 911 conçue pour être montée en liaison pivot sur le bord extérieur d'une palette du repose-pieds 5, et une biellette 912, montée mobile en rotation par rapport à un brancard avant 82, permettant de lier la pince 911 à l'extrémité inférieure du brancard avant 82.

## Revendications

1. Poussette pliante pour enfant, comprenant un châssis pliable portant deux roues ou blocs de roues avant (3, 4) se rapprochant l'une de l'autre, en position pliée,
**caractérisée en ce qu'**elle comprend un repose-pieds (5) formé de deux portions (51, 52) articulées entre-elles et articulées chacune sur un élément (1, 2) dudit châssis, et montées de façon que :
- dans la position dépliée de ladite poussette, lesdites portions (51, 52) forment un repose-pieds (5) s'étendant sensiblement horizontalement ;
- dans ladite position pliée, lesdites portions (51, 52) définissent un V dont la partie inférieure forme au moins un point d'appui sur le sol, de façon que ladite poussette tienne en équilibre dans une position debout, en appui sur au moins trois points d'appui, dont au moins un premier point d'appui formé par ladite partie inférieure du V et au moins un second point d'appui formé par lesdites roues avant (3, 4).

2. Poussette pliante selon la revendication 1, **caractérisée en ce que** chacune desdites portions (51, 52) du repose-pieds (5) présente un premier point d'appui sur le sol.

3. Poussette pliante selon la revendication 2, **caractérisée en ce que** l'articulation (53) entre lesdites portions du repose-pieds est décalée de façon à maximiser l'écartement entre lesdits premiers points d'appui, en position pliée.

4. Poussette pliante selon l'une quelconque des revendications 1 à 3, **caractérisée en ce que** lesdites portions (51, 52) sont configurées de façon que, dans ladite position pliée, la force appliquée à chacun desdits premiers points d'appui par le poids de ladite poussette s'oppose au dépliage de celle-ci.

5. Poussette pliante selon l'une quelconque des revendications 1 à 4, **caractérisée en ce que** lesdites portions (51, 52) sont de forme identique.

6. Poussette pliante selon l'une quelconque des revendications 1 à 5, **caractérisée en ce que** lesdits premiers points d'appui sont formés directement par un bord (512, 522) de chacune desdites portions (51, 52).

7. Poussette pliante selon l'une quelconque des revendications 1 à 5, **caractérisée en ce que** lesdits premiers points d'appui sont formés par une extension (513, 523) prévue à cet effet sur chacune desdites portions (51, 52).

8. Poussette pliante selon l'une quelconque des revendications 1 à 7, **caractérisée en ce que** ledit châssis présente une poutre centrale (7), le long de laquelle coulissent des montants (1, 2) portant lesdites roues (3, 4), selon un pliage de type parapluie.

9. Poussette pliante selon la revendication 8, **caractérisée en ce que** le mouvement desdites portions (51, 52) de repose-pieds (5), lors du pliage et/ou du dépliage de la poussette, est contrôlé par un câble (54) ou une biellette.

10. Poussette pliante selon l'une quelconque des revendications 1 à 7, **caractérisée en ce que** ledit châssis présente un jeu de croisillons assurant le rapprochement et l'éloignement desdites roues (3, 4), respectivement lors du pliage et du dépliage.

11. Poussette pliante selon l'une quelconque des revendications 1 à 10, **caractérisée en ce que** le mouvement desdites portions (51, 52) de repose-pieds (5), lors du pliage et/ou du dépliage de la poussette, est contrôlé par le déplacement de montants (1, 2) portant lesdites roues avant (3, 4).

12. Poussette pliante selon l'une quelconque des revendications 1 à 11, **caractérisée en ce que** l'articulation entre une desdites portions et ledit châssis est une articulation selon au moins deux axes de rotation.

## Claims

1. Folding pushchair for a child, comprising a foldable frame which bears two front wheels or wheel units (3, 4) which are brought close to one another in the folded position,
**characterised in that** it comprises a footrest (5) which is formed by two portions (51, 52) which are articulated to one another, and are each articulated on an element (1, 2) of the said frame, and are fitted such that:
- in the unfolded position of the said pushchair, the said portions (51, 52) form a footrest (5) which extends substantially horizontally;
- in the said folded position, the said portions (51, 52) define a "V", the lower part of which forms at least one point of support on the ground, such that the said pushchair is kept balanced in an upright position, supported on at least three support points, including at least a first support point formed by the said lower part of the "V" and at least a second support point formed by the said front wheels (3, 4).

2. Folding pushchair according to claim 1, **characterised in that** each of the said portions (51, 52) of the footrest (5) has a first support point on the ground.

3. Folding pushchair according to claim 2, **characterised in that** the articulation (53) between the said portions of the footrest is offset such as to maximise the spacing between the said first support points in the folded position.

4. Folding pushchair according to any one of claims 1 to 3, **characterised in that** the said portions (51, 52) are configured such that, in the said folded position, the force which is applied to each of the said first support points by the weight of the said pushchair opposes unfolding of the latter.

5. Folding pushchair according to any one of claims 1 to 4, **characterised in that** the said portions (51, 52) have an identical form.

6. Folding pushchair according to any one of claims 1 to 5, **characterised in that** the said first support points are formed directly by an edge (512, 522) of each of the said portions (51, 52).

7. Folding pushchair according to any one of claims 1 to 5, **characterised in that** the said first support points are formed by an extension (513, 523) which is provided for this purpose on each of the said portions (51, 52).

8. Folding pushchair according to any one of claims 1 to 7, **characterised in that** the said frame has a central beam (7), along which there slide bars (1, 2) which support the said wheels (3, 4) according to folding of an umbrella type.

9. Folding pushchair according to claim 8, **characterised in that** the movement of the said portions (51, 52) of footrest (5) during the folding and/or unfolding of the pushchair is controlled by a cable (54) or a connection rod.

10. Folding pushchair according to any one of claims 1 to 7, **characterised in that** the said frame has a set of crosspieces which assure the bringing together and moving apart of the said wheels (3, 4) respectively during folding and unfolding.

11. Folding pushchair according to any one of claims 1 to 10, **characterised in that** the movement of the said portions (51, 52) of footrest (5) during the folding and/or unfolding of the pushchair is controlled by the displacement of bars (1, 2) which support the said front wheels (3, 4).

12. Folding pushchair according to any one of claims 1 to 11, **characterised in that** the articulation between one of the said portions and the said frame is an articulation according to at least two axes of rotation.

## Patentansprüche

1. Zusammenklappbare Kinderwagen, der einen zusammenklappbaren Rahmen aufweist, der zwei Vorderräder oder Vorderräderblöcke (3, 4) trägt, die sich in der zusammengeklappten Position einander annähern,
**dadurch gekennzeichnet, dass** er eine Fußstütze (5) aufweist, die aus zwei gelenkig miteinander verbundenen Teilen (51, 52) besteht und jeweils gelenkig an ein Element (1, 2) des besagten Rahmens angebracht und derart montiert sind, dass:
- in der ausgeklappten Position (frz.: position dépliée) des besagten Kinderwagens die besagten Teile (51, 52) eine Fußstütze (5) bilden, die sich in etwa waagerecht erstreckt;
- in der zusammengeklappten Position (frz.: position dépliée) die besagten Teile (51, 52) ein V bilden, dessen Unterteil mindestens einen Auflagepunkt am Boden bildet, so dass der besagte Kinderwagen sich in einer stehenden Position dadurch im Gleichgewicht hält, dass sie sich auf mindestens drei Auflagepunkte abstützt, wobei mindestens ein erster Auflagepunkt vom besagten Unterteil des V gebildet und mindestens ein zweiter Auflagepunkt durch die besagten Vorderräder (3, 4) gebildet wird.

2. Zusammenklappbarer Kinderwagen nach Anspruch 1, **dadurch gekennzeichnet, dass** jedes der besagten Teile (51, 52) der Fußstütze (5) einen ersten Auflagepunkt am Boden aufweist.

3. Zusammenklappbarer Kinderwagen nach Anspruch 2, **dadurch gekennzeichnet, dass** das Gelenk (53) zwischen den besagten Teilen der Fußstütze so verschoben ist, dass der Abstand zwischen den besagten ersten Auflagepunkten in der zusammengeklappten Position maximiert wird.

4. Zusammenklappbarer Kinderwagen nach einem der Ansprüche 1 bis 3, **dadurch gekennzeichnet, dass** die besagten Teile (51, 52) so ausgebildet sind, dass in der besagten zusammengeklappten Position die auf jedem der besagten ersten Auflagepunkte durch das Gewicht des besagten Kinderwagens wirkende Kraft dem Auseinanderklappen des Wagens entgegenwirkt.

5. Zusammenklappbarer Kinderwagen nach einem der Ansprüche 1 bis 4, **dadurch gekennzeichnet, dass** die besagten Teile (51, 52) identische Formen aufweisen.

6. Zusammenklappbarer Kinderwagen nach einem der Ansprüche 1 bis 5, **dadurch gekennzeichnet, dass** die besagten ersten Auflagepunkte direkt durch einen Rand (512, 522) eines jeden der besagten Teile (51, 52) gebildet werden.

7. Zusammenklappbarer Kinderwagen nach einem der Ansprüche 1 bis 5, **dadurch gekennzeichnet, dass** die besagten ersten Auflagepunkte von einer zu diesem Zweck auf jedem der besagten Teile (51, 52) vorgesehenen Verlängerung (513, 523) gebildet werden.

8. Zusammenklappbarer Kinderwagen nach einem der Ansprüche 1 bis 7, **dadurch gekennzeichnet, dass** der besagte Rahmen einen mittleren Balken (7) aufweist, entlang dem die Streben (1, 2), welche die besagten Räder (3, 4) tragen, nach einem Klappen in der Art eines Regenschirms gleiten.

9. Zusammenklappbarer Kinderwagen nach Anspruch 8, **dadurch gekennzeichnet, dass** die Bewegung der besagten Teile (51, 52) der Fußstütze (5) beim Zusammenklappen und/oder beim Ausklappen des Kinderwagens durch ein Seil (54) oder einen kleinen Hebel gesteuert wird.

10. Zusammenklappbarer Kinderwagen nach einem der Ansprüche 1 bis 7, **dadurch gekennzeichnet, dass** der besagte Rahmen einen Satz Kreuzstreben aufweist, die das Annähern oder das Auseinanderstreben der besagten Räder (3, 4) jeweils beim Zusammenklappen bzw. beim Auseinanderklappen sicherstellen.

11. Zusammenklappbarer Kinderwagen nach einem der Ansprüche 1 bis 10, **dadurch gekennzeichnet, dass** die Bewegungen der besagten Teile (51, 52) der Fußstütze (5) beim Zusammenklappen und/oder Auseinanderklappen des Kinderwagens durch die Bewegung der Streben (1, 2) gesteuert wird, welche die besagten Vorderräder (3, 4) tragen.

12. Zusammenklappbarer Kinderwagen nach einem der Ansprüche 1 bis 11, **dadurch gekennzeichnet, dass** das Gelenk zwischen einem der besagten Teile und dem besagten Rahmen nach mindestens zwei Drehachsen gelenkig ist.
